# EUROPÄISCHE PATENTSCHRIFT

(11) **EP 3 599 441 B1**
(45) Veröffentlichungstag und Bekanntmachung des Hinweises auf die Patenterteilung: **26.04.2023**
(21) Anmeldenummer: 18185417.5
(22) Anmeldetag: 25.07.2018
(51) Int. Cl.: F28F 23/00, B23Q 11/12, B23Q 11/14, C09K 5/06, C09K 5/10, C09K 5/12, F28D 15/00, F28D 20/02

(54) **REGENERIERVORRICHTUNG ZUM REGENERIEREN EINER KÜHLMITTELDISPERSION**
REGENERATION DEVICE FOR REGENERATING A COOLANT DISPERSION
DISPOSITIF DE RÉGÉNÉRATION PERMETTANT DE RÉGÉNÉRER UNE DISPERSION DE LIQUIDE DE REFROIDISSEMENT

(43) Veröffentlichungstag der Anmeldung: 29.01.2020
(73) Patentinhaber: GF Machining Solutions AG, 2504 Biel/Bienne (CH)
(72) Erfinder: FISCHER, Ludger, 6317 Zug (CH); VON ARX, Silvan, 4623 Neuendorf (CH); REINHARD, Edwin, 3362 Niederönz (CH); WEISS, Lukas, 8330 Pfäffikon (CH)
(74) Vertreter: Fenner, Seraina

(56) Entgegenhaltungen:
- WO-A1-98/33582
- DE-A1- 10 120 116
- DE-B4- 10 120 116

## Beschreibung

### TECHNISCHES GEBIET

Die vorliegende Erfindung bezieht sich auf eine Regeneriervorrichtung und ein Verfahren zum Regenerieren einer Kühlmitteldispersion. Die vorliegende Erfindung bezieht sich insbesondere auf eine Redispergiereinheit zum Redispergieren der Kühlmitteldispersion, welche ein Phasenwechselmaterial enthält. Des Weiteren bezieht sich die vorliegende Erfindung auf ein Kühlsystem zum Kühlen eines Maschinenelementes.

### STAND DER TECHNIK

Werkzeugmaschinen generieren unter anderem durch Motorantriebe viel Wärme, welche eine Erhöhung der Temperatur der Maschinenelementes, insbesondere der Antriebseinheit bewirkt. Die stark steigende Temperatur kann die Leistung und Bearbeitungsgenauigkeit der Werkzeugmaschine reduzieren und sogar die Maschinenelemente sowie die Antriebseinheit schädigen. Deshalb wird ein Kühlsystem zum Kühlen von Maschinenelementen verwendet. Wasser, Luft und Öl sind oft verbreitete Kühlmedien.

DE 95 25 661 beschreibt einen Latentwärmespeicher zur Anordnung im Kühlmittelkreislauf eines Kraftfahrzeugs, bei dem das Kühlmittel bei warmer Verbrennungsmaschine und kaltem Speichermedium Wärme an das Speichermedium abgibt und bei kalter Verbrennungsmaschine und warmem Speichermedium von dem Speichermedium Wärme aufnimmt. Ein Latenwärmespeicherelement ist eingesetzt.

DE 3042 528 beschreibt eine elektrische Maschine mit einem Stator, einem Rotor und einer Kühleinrichtung. Der Stator weist einen dicht verschlossenen Hohlraum auf, der mit einem Wärmespeichermedium gefüllt ist, welcher bei Erreichen einer im Betriebstemperaturbereich der Maschine liegenden Temperatur durch Aufnahme von Wärmeenergie vom festen in den flüssigen Zustand übergeht.

Phasenwechselmaterialien sind für ihre grosse Wärmeaufnahmefähigkeit beim Phasenübergang bekannt und werden vermehrt verwendet zur effizienten Kühlung. Phasenwechselmaterialien sind Stoffe, welche bei einer bestimmten Temperatur eine Phasenumwandlung vollziehen und dabei eine grosse Wärmemenge freisetzen oder aufnehmen. Inmitten der Phasenumwandlung, zum Beispiel bei der Zustandsänderung von fest zu flüssig, wird die Temperatur durch Zu-oder Abfluss von Wärme kaum verändert. Eine relativ grosse Menge Wärme kann bei annähernd konstanter Temperatur aufgenommen werden. Dies wird realisiert, indem ein Speichermaterial gewählt wird, welches bei der gewünschten Betriebstemperatur einen Phasenwechsel aufweist.

EP 2949422 beschreibt ein Maschinenelement, z.B. eine Motorspindel oder eine elektromechanische Antriebseinheit, mit integriertem, inneren Kühlsystem. Das Kühlmittel ist eine Dispersion, welche mindestens ein Phasenwechselmaterial enthält. In der Verwendung der Dispersion als Kühlmittel ist ein kontinuierliches Redispergieren notwendig. EP 2949422 beschreibt eine dynamische Redispergiereinheit, welche mit einer Antriebsmaschine und mittels Rotor-Stator vorgesehen ist. Die Pumpe des Kühlkreislaufes ist konstruktiv so ausgelegt ist, dass die Pumpe ein Dispergieren der diskontinuierlichen Phase der Kühlmittelsuspension bewirkt. Die Pumpe wird als Stator mit Statorkranz mit einem sich darin drehenden Rotor mit Rotorkranz ausgeführt. Die dynamische Redispergiereinheit hat jedoch den Nachteil, dass ein Motor benötig wird.

WO 98/33582 beschreibt ein Verfahren und eine Vorrichtung zur Herstellung eines dispersen Gemisches. Die Vorrichtung umfasst eine Grundeinheit mit zwei Folien, in die jeweils auf einer Seite der Folien eine parallele Schar von Nuten eingebracht ist. Die zwei Folien sind in der Grundeinheit in der Weise zusammengesetzt dass die mit Nuten versehenen Seiten der beiden Folien aufeinander liegen und miteinander einen Winkel bilden.

DE 10120116A1 beschreibt eine Einrichtung zur Wartung eines flüssigkeitsgekühlten elektrischen Geräts. Zur Wartung eines Geräts mit einem eigenen geschlossenen Kühlmittelkreislauf, insbesondere eines mobilen Hochfrequenzsenders, wird eine Wartungseinrichtung vorgeschlagen, welche den Kühlmittelkreislauf in einem Führungssystem ausserhalb des Geräts schliesst und das umgewälzte Kühlmittel von Gasen, Wasser und Säuren reinigt. Eine solche Kühlmittel-Regenerierung kann gleichzeitig mit einem Betriebstest des Geräts durchgeführt werden, wobei die Wartungseinrichtung definierte Betreibtemperaturen vorgeben kann.

Des Weiteren weist die Dispersion mit Phasenwechselmaterial die Eigenschaft auf, dass die Schmelztemperatur höher liegt als die Erstarrungstemperatur. Dieser Effekt ist als Unterkühlung bekannt. Die Unterkühlung ist grundsätzlich nachteilig. Daher ist eine möglichst kleine Unterkühlung erwünscht. Im Fall einer Unterkühlung muss in der Vorrichtung zum Abführen der Wärme, der Rückkühleinheit, nicht nur die über den senwechsel aufgenommene Wärme, sondern zusätzlich auch noch die sensible Wärme unterhalb des Schmelzpunktes bis zur Unterkühlungstemperatur abgeführt werden. Zwar steht dieser Temperaturhub für die Aufnahme von Wärme zur Verfügung, wiederspricht aber dem ursprünglichen Ziel einer isothermen Kühlung. Die Abfuhr dieser sensiblen Wärme müsste ggfs. sogar wieder zugeführt werden, womit das Verfahren insgesamt energetisch ineffizient ist.

### DARSTELLUNG DER ERFINDUNG

Es ist daher eine Aufgabe der Erfindung, eine Regeneriervorrichtung zum Regenerieren einer Kühlmitteldispersion zu entwickeln, welches das Einfrieren des Phasenwechselmaterials mit einer erhöhter Energieeffizienz ermöglicht.

Es ist weiterhin eine Aufgabe der Erfindung, eine Redispergiereiheit zum Redispergieren einer Kühlmitteldispersion mit Phasenwechselmaterial anzugeben, welche eine einfache Konstruktion aufweist.

Es ist eine Aufgabe der Erfindung, ein Kühlsystem zum Kühlen eines Maschinenelementes vorzuschlagen, welches das Maschinenelement auf eine konstante Temperatur kühlen kann.

Es ist eine Aufgabe der Erfindung, dafür zu sorgen, dass in Abhängigkeit des Kühlbedarfs eines Maschinenelementes die Eingangstemperatur so gewählt wird, dass die latente Wärme beim Aufschmelzen des Phasenwechselmaterials maximal genutzt wird. Dies ist gleichbedeutend mit der Zielsetzung, die Differenz zwischen Eintritts- und Austrittstemperatur des Kühlmediums beim Maschinenelement möglichst gering zu halten.

Das Kühlmedium soll sich insgesamt bei der Aufnahme der Wärme möglichst nur im latenten Bereich bewegen. Daher muss auch die Temperatur des Kühlmediums beim Eintritt in das zu kühlende Gerät nur knapp unterhalb der des Schmelzpunktes befinden und damit gleichbedeutend muss die Temperatur beim Austritt aus der Rückkühleinheit dieser Temperatur entsprechen und damit muss diese Temperatur deutlich oberhalb der Unterkühlungstemperatur liegen und damit ist die Aufgabe der Erfindung einer Rückkühleinheit, die latente Wärme bei tieferer Temperatur als der Schmelztemperatur, eben der Unterkühlungstemperatur, abzuführen und möglichst effizient die Temperatur anschliessend wieder anzuheben, auf eben kurz unterhalb der Schmelztemperatur.

Diese und andere Aufgaben werden durch die Merkmale der Ansprüche 1 und 23 gelöst.

Die vorliegende Erfindung umfasst eine Regeneriervorrichtung zum Regenerieren einer Kühlmitteldispersion mit einem Phasenwechselmaterial, eine Redispergiereinheit zum Redispergieren der Kühlmitteldispersion und eine Rückkühleinheit. Die Kühlmitteldispersion enthält ein Phasenwechselmaterial. Die Redispergiereinheit weist eine geeignete Blende auf. Die Rückkühleinheit ermöglicht das Einfrieren des Phasenwechselmaterials durch Abführen der in der Kühlmitteldispersion gespeicherten Wärme und ist so konfiguriert, dass die abgeführte Wärme mindestens teilweise rückgewonnen wird um die Kühlmitteldispersion auf eine Eintrittstemperatur direkt unterhalb der Schmelztemperatur aufzuheizen.

Die Dispersion besteht aus einem flüssigen Dispersionsmedium und einer Dispersphase, welche fest oder füssig sein kann. Eine Dispersion mit einer festen Dispersphase wird als Suspension, eine Dispersion mit einer flüssigen Dispersphase als Emulsion bezeichnet. Für die vorliegende Erfindung kann die Dispersion als Kühlmittel ein Phasenwechselmaterial in fester und flüssiger Form enthalten. Durch Verwendung einer Dispersion zum Beispiel aus Wasser und einem geeigneten Phasenwechselmaterial, welches die Phasenumwandlung im Bereich der Betriebstemperatur eines Maschinenelementes vollzieht, wird bei dieser Betriebstemperatur eine hohe Wärmekapazität des Kühlmittels erreicht. Dadurch kann die Abwärme eines Maschinenelements durch die Dispersion mit Phasenwechselmaterial bei kleiner Erhöhung der Kühlmitteltemperatur aufgenommen werden. Daher kann das Maschinenelement optimal gekühlt werden, nämlich bei geringer Durchflussrate und geringer Temperaturdifferenz innerhalb des zu kühlenden Maschinenelements. Typischerweise erfolgt der Übergang von der sensiblen zur latenten Wärmeaufnahme, resp. von der latenten zur sensiblen Wärmeaufnahme resp. -Abgabe nicht schrittartig, sondern kontinuierlich. Dies bedeutet, dass beispielsweise beim Erwärmen der Dispersion die spezifische Wärmekapazität im sensiblen Bereich einen konstanten Wert hat, der sich beim Erreichen der Aufschmelztemperatur des Phasenwechselmaterials und solange die latente Wärmeaufnahme vor sich geht, scheinbar erhöht, und nach vollständigem Aufschmelzen wieder abnimmt und einen tieferen konstanten Wert annimmt. Aus diesem Verlauf der Kennlinie, der einer Normalverteilung ähnelt, ergibt sich ein Betriebspunkt, an dem der Effekt der latenten Wärmeaufnahme maximal ist. Dieser wird nachstehend als optimaler Betriebspunkt bezeichnet. Dabei ist der Betriebspunkt genau genommen ein sehr enger Temperaturbereich, dabei ist eng definiert bei wenigen Kelvins, beispielsweise 2 bis 3 Kelvin.

Wenn die Dispersion als Kühlmittel verwendet wird, tritt die Dispersion derart ein, dass sich die disperse Phase in einem festen Zustand (gefroren) befindet in der nahezu alle Phasenwechselmaterial-Partikel gefroren sind und tritt aus der Vorrichtung in einem flüssigen Zustand aus, bei dem nahezu alle Phasenwechsel-Partikel aufgeschmolzen sind. Die Regeneriervorrichtung ermöglicht das Einfrieren des aufgeschmolzenen Phasenwechselmaterials durch Abführen der in der Kühlmitteldispersion gespeicherten Wärme.

In der vorliegenden Erfindung wird das Einfrieren des Phasenwechselmaterials vorteilhaft durch ein mehrstufiges Abführen der Wärme erreicht. Die Rückkühleinheit ist so konfiguriert, dass die sensible Wärme abgeführt wird um die Kühlmitteldispersion zu kühlen und dass die latente Wärme abgeführt wird um das Einfrieren des Phasenwechselmaterials zu ermöglichen. Während des Abführens der sensiblen Wärme sinkt die Temperatur der Kühlmitteldispersion bis auf eine bestimmte Temperatur. Während dieser Phase bleibt das Phasenwechselmaterial im flüssigen Zustand. Das Einfrieren des Phasenwechselmaterials findet erst durch das Abführen der latenten Wärme statt.

Dabei wird aufgrund der Unterkühlung des Phasenwechselmaterials (PCM) diese Temperatur erst unterhalb des Schmelzpunktes erreicht.

In einem Ausführungsbeispiel umfasst die Rückkühleinheit einen ersten Wärmeübertrager, welcher mindestens einen Anteil der sensiblen und/oder latenten Wärme abführen kann. Um die Energieeffizienz zu erhöhen, wird der erste Wärmeübertrager im Gegenstrom betrieben, um mindestens einen Anteil der sensiblen und/oder latenten Wärme rekuparativ zum Aufheizen der Kühlmitteldispersion auf die Eintrittstemperatur zu verwenden. Die Eintrittstemperatur definiert die Temperatur der Kühlmitteldispersion, wenn die Kühlmitteldispersion in das zu kühlende Element eintritt. Um eine optimale Kühlung zu gewährleisten, soll die Eintrittstemperatur im Phasenumwandlungstemperaturbereich des Phasenwechselmaterials liegen, in welchem das Phasenwechselmaterial von fest zu flüssig wechselt, vorzugsweise im unteren Bereich des Phasenumwandlungstemperaturbereichs. Dadurch wird eine optimale Kühlung des Maschinenelementes erreicht, weil einerseits die Wärmekapazität im Phasenumwandlungsbereich sehr hoch ist und andererseits die Temperaturvariation der Kühlmitteldispersion durch Aufnahme der Wärme minimal ist.

In einem weiteren Ausführungsbeispiel umfasst die Rückkühleinheit einen zweiten Wärmeübertrager, welcher mit einem Kältesystem verbunden ist, um das Einfrieren des Phasenwechselmaterials durch das Abführen mindestens eines Anteils der latenten Wärme der Kühlmitteldispersion zu ermöglichen.

In einer bevorzugten Variante wird ein dritter Wärmeübertrager verwendet um die Temperatur der Kühlmitteldispersion auf eine zweite Solltemperatur zu regeln bevor die Kühlmitteldispersion in die Redispergiereinheit eintritt. Insbesondere liegt die zweite Solltemperatur im oberen Bereich des Phasenumwandlungtemperaturbereichs, bevorzugt im Bereich von 25 bis 26°C. Des Weiteren ist der dritte Wärmeübertrager vorteilhaft aber nicht zwingend notwendigerweise mit dem Kältesystem verbunden, um einen Anteil der Wärme aus dem Kältesystem rekuperativ zu verwenden. Damit benötigt die Regeneriervorrichtung keine zusätzliche Wärmequelle um die teilweise aufgeschmolzene Kühlmitteldispersion weiter zu erwärmen, und um damit die Redispergiereinheit und den ersten und zweiten Wärmeübertrager besser betreiben zu können. Einerseits fliesst die Dispersion durch den dritten Wärmeübertrager, und auf der anderen Seite strömt das Kältemittel, welches auf einer höheren Temperatur als die der Kühlmitteldispersion liegt. Die Kühlmitteldispersion nimmt die Wärme des Mittels auf damit alle allfällig noch nicht aufgeschmolzenen PCM Partikel doch noch aufzuschmelzen, damit in der nachfolgenden Redispergiereinheit ein einfaches Redispergieren möglich ist, weil Redispergieren als Emulsion viel einfacher ist als bei einer Suspension.

Ferner wird dadurch das Temperaturniveau am dritten Wärmeübertrager erhöht. Damit tritt die Dispersion mit höherem Temparturniveau TC02 in den ersten Wärmeübertrager ein. Damit steht am ersten Wärmeübertrager ein höheres treibendes Temperaturgefälle zur Verfügung, damit ist am ersten Wärmeübertrager ein Ausgleich von allfälligen Wärmeverlusten möglich und die Eintrittstemperatur TI04 immer ausreichend hoch genug sein kann, dass sie möglichst nahe am Schmelzpunkt liegt.

In einem Ausführungsbeispiel ist der dritte Wärmeübertrager vor der Redispergiereinheit angeordnet und sind der erste und der zweite Wärmeübertrager nach der Redispergiereinheit angeordnet. Zwischen dem dritten Wärmeübertrager und Redispergiereinheit ist eine Rühreinheit angeordnet.

In einem Ausführungsbeispiel umfasst die Regeneriereineinheit eine Regeleinheit, welche mindestens einen Temperaturwächter und mindestens einen Durchflusswächter aufweist. Diese Regeleinheit kann das Ziel verfolgen, die Eintrittstemperatur konstant zu halten.

In einem Ausführungsbeispiel wird eine modelbasierte prädiktive Regelung (MPC) verwendet, welche die Eintrittstemperatur in Abhängigkeit von der abzuführenden Wärme im Maschinenelement bestimmt. Die Eintrittstemperatur wird dabei so gewählt, dass die Wärmeaufnahme im Bereich des optimalen Betriebspunkt der Kühlmitteldispersion erfolgt, um die maximale scheinbare Wärmekapazität zu nutzen.

In einem weiteren Ausführungsbeispiel wird eine modelbasierte prädiktive Regelung (MPC) verwendet, welche die Eintrittstemperatur konstant hält, jedoch dafür sorgt, dass die verfügbare latente Wärmekapazität durch teilweises Aufschmelzen des Phasenwechselmaterials so verändert wird, dass sie der abzuführenden Wärme im Maschinenelement entspricht. Dies hat den Vorteil, dass im Idealfall der Durchfluss, die Eintrittstemperatur und die Austrittstemperatur aus dem zu kühlenden Maschinenelement konstant sind.

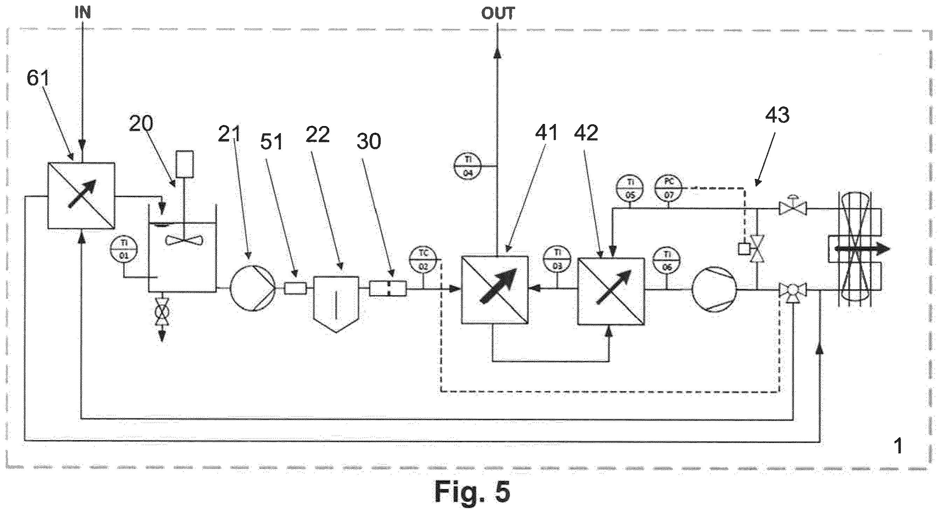

In einem Ausführungsbeispiel findet die Regelung der Temperatur an der Stelle zwischen dem ersten Wärmeübertrager und dem zwiten Wärmeübertrager (TI03 in Fig.5) durch eine Modulation des Verdampfungsdrucks in der Kältemaschine statt, beispielsweise durch eine Bypassregelung. Dadurch kann sichergestellt werden, dass einerseits eine hinreichend tiefe Temperatur (TI05 in Fig.5) des Kältemittels sichergestellt wird, andererseits aber eine genau angepasste Wärmeabfuhr im zweiten Wärmeübertrager vorliegt. Somit wird genau die latente Wärmemenge auf dem Niveau der Unterkühlung abgeführt, aber eben nicht unnötig die Temperatur abgesenkt. Eine zu starke Absenkung der Temperatur würde nämlich dazu führen, dass am ersten Wärmeübertrager nicht hinreichend wieder aufgewärmt werden kann, also die Eintrittstemperatur (T04 in Fig. 5) zu tief bleibt.

Allfällige Unsicherheiten und Schwankungen werden durch die Ausführung mit einem dritten Wärmeübertrager erfinderisch gelöst.

Für die Regelung sind mindestens zwei Regelkreise notwendig, die vorteilhaft gekoppelt sind. Der erste Regelkreis ist eine Regelung von TI03 über den Druck im Kältemaschinenprozess und indirekt damit über die Vorlauftemperatur TI05 ist notwendig. Dabei sind zwei Aspekte gleichzeitig einzuhalten. Erstens, muss die richtige Eintrittstemperatur vorliegen. Diese ist eine Funktion der Unterkühlung der Kühlmitteldispersion und ist vorgängig experimentell zu bestimmen. Zweitens muss die richtige Wärmemenge eingestellt sein. Dies kann an der Überprüfung der Temperatur T06 erfolgen.

Die zweite Regelung ist notwendig zum Sicherstellen der möglichst genau passenden Eintrittstemperatur T04 für den Eintritt in das zu kühlende Maschinenelement. Dies erfolgt sowohl mit dem ersten Regelkreis als auch mit Hilfe des Dreiwegeventils am Kältemittelkreislauf und dem dritten Wärmeübertrager .

In der vorliegenden Erfindung, wird ein Phasenwechselmaterial als Dispersphase verwendet, welche einen Phasenwechsel fest-flüssig in einem Phasenumwandlungstemperaturbereich von 18 bis 28°C, vorzugsweise in einem Phasenumwandlungstemperaturbereich von 21 bis 25°C aufweist. Das Dispersionsmedium besteht aus einem Fluid mit niedriger Viskosität, bevorzugt 0.5 bis 1000 mPas, zum Beispiel, aus einem Öl, einem Glykol oder einer wässrigen Formulierung. Die Dispersphase besteht aus einem organischen, unpolaren Medium, bevorzugt einem Paraffin, einer Fettsäure oder einem Fettsäureester, zum Beispiel Paraffin mit der Summenformel CₙH₂ₙ₊₂. Zusätzlich enthält die Dispersion als Kühlmittel ein Emulgatorsystem aus oberflächenaktiven Substanzen. Das Emulgatorsystem bewirkt die Stabilisierung der Dispersion und enthält zum Beispiel eine Mischung von mindestens zwei der folgenden Stoffe: Sorbitanstearat, Sorbitan Monooleat, Glycerolmonostearat und Teiletoxyliertem Alkohol.

In einer Ausführungsvariant, hat die Dispersphase einen Durchmesser von maximal 5µm, bevorzugt kleiner 1µm, damit die Stabilität der Kühlmitteldispersion gegen Aufrahmen gegeben ist.

In einer Variante, werden der Kühlmitteldispersion sogenannte Keimbildner hinzugefügt, die den Effekt der Unterkühlung minimieren, beispielsweise von 15 Kelvin Temperaturunterschied zwischen Schmelzpunkt und Gefrierpunkt auf dann noch 5 Kelvin.

In einer Variante beträgt der Anteil der Dispersphase in der Kühlmitteldispersion mindestens 10%, bevorzugt 15 bis 25%. Die Phasenwechselenthalpie der Dispersion beträgt 30kJ/kg bis 60kJ/kg.

In einer vorteilhaften Variante, enthält die Dispersion ein Emulgatorsystem, welches so ausgebildet ist, dass mit einem Scherraten von höchstens 50000 1/s eine stabile Emulsion entsteht. Zur Stabilisierung enthält die Dispersion ein Emulgatorsystem, welches oberflächenaktiven Substanzen enthält. Zum Beispiel ein Emulgatorsystem mit einem HLB Wert (Hydrophilic-Lipophiliv Balance) von 8 bis 15. Das Emulgatorsystem ist so gewählt, dass bereits mit tiefen Scherraten eine stabile Emulsion entsteht.

Vorteilhaft weist die Regeneriervorrichtung zusätzlich eine Rückkühleinheit, eine Rühreinheit, eine Pumpe und ein Filter auf. Als Rühreinheit wird in einer Variante ein Schlaufenreaktor verwendet um eine homogene Verteilung der Dispersion zu erzielen. in einer anderen Variante wird ein einfaches Rührwerk verwendet.

Zum Stabilisieren der Kühlmitteldispersion mit einem Phasenwechselmaterial ist ein kontinuierliches Redispergieren vorteilhaft. In der vorliegenden Erfindung wird eine statische Redispergiereinheit mit einer Blende verwendet. Eine statische Redispergiereinheit ist wesentlich einfacher zu realisieren als eine dynamische mit Motor. Die Redispergiereinheit ist derart zu gestalten, dass genügend Scherkräfte entstehen so dass ein Redispergieren der Emulsion stattfindet. Die Höhe der notwendigen Scherkräfte hängt von der allgemeinen Stabilität der Emulsion und insbesondere vom Ermulgatorsystem ab. Gleichzeitig darf die Redispergiereinheit keine zu hohen Druckverluste aufweisen, da diese letztendlich von einer Förderpumpe aufzubringen sind.

Die Blende weist einen Blendenkörper mit mindestens einer Blendenöffnung auf. In einer bevorzugten Variante, weist die Blende eine Vielzahl von Blendenöffnungen auf um ein optimales Redispergieren der Kühlmitteldispersion zu erzielen. Eine Einengung der Strömung führt zur Erhöhung der Strömungsgeschwindigkeit und durch Einschnürung der Strömung beim Durchströmen der Blendenlöcher zu einer Scherung und zu einer turbulenten Strömung. Dadurch wird die Kühlmitteldispersion dispergiert. Im Vergleich zu einer dynamischen Lösung, hat diese Variante den Vorteil einer kostengünstigen Konstruktion. Des Weiteren ist die Blende einfach montier- und abmontierbar.

In einem Ausführungsbeispiel besitzt die Blendenöffnung einen Durchmesser von 0.5 bis 2.5 mm, vorzugsweise, 0.7 mm, 1 mm und 1.5 mm. Die Wahl des Durchmessers ist abhängig von der Zusammensetzung der Kühlmitteldispersion und der Betriebstemperatur des zu kühlenden Maschinenelements.

In einer Variante sind die Blendenlöcher gleichverteilt zueinander im Blendenkörper angeordnet. Die Blende hat einen sehr kleinen Durchmesser. Das würde nach Stand der Technik nicht möglich sein, da damit der Druckverlust sehr gross und die Pumpleitung hoch wäre und damit eine Erwärmung des Produktes stattfinden würde. Dies ist also bisher apparativ aufwändig und energetisch ungünstig. Zu diesem Zweck werden sehr eine Vielzahl von Blendenöffnungen gleichverteilt durchgehend in einem Blendenkörper angebracht Damit kann der hohe Druckverlust vermieden werden. Trotzdem werden genügend grosse Scherraten erzielt.

In einer bevorzugten Variante ist die Redispergiereinheit nach dem Durchströmen des zu kühlenden Maschinenelements anzuordnen. Nach Durchströmen eines zu kühlenden Maschinenelementes ist das Phasenwechselmaterial in der Kühlmitteldispersion geschmolzen; und liegt die Dispersion mit dem Phasenwechselmaterial als Emulsion vor und lässt sich somit leicht redispergieren.

In Versuchen wurde nachgewiesen, dass sich mit der neuen Blende als Redispergiereinheit sehr feinteilige Dispersionen herstellen, respektive redispergieren lassen. Es wurden grobe Emulsionen über die Blende zirkuliert und die Partikelgrössenverteilungen wurden gemessen. Es wurden Messungen mit 3 verschiedenen Blendendurchmessern und jeweils unterschiedlicher Anzahl an Blendenöffnungen durchgeführt, zum Beispiel hatte eine Blende eine Blendenöffnung mit einem Durchmesser von 2.5 mm; eine Blende hatte 21 Blendenöffnungen mit einem Durchmesser von 1 mm, und eine Blende hat 61 Blendenöffnungen mit einem Durchmesser 0.5 mm. Mit allen Blenden konnte ein stationärer Endwert der Partikelgrössenverteilung erzielt werden der sehr zufriedenstellend ist. Die berechneten Scherraten blieben unter 20000 1/s und somit wesentlich kleiner als es handelsübliche Rotor-Stator Geometrien tun.

In der vorliegenden Erfindung, umfasst ein Kühlsystem zum Kühlen eines Maschinenelementes, eine Kühlmitteldispersion und eine Regeneriervorrichtung.

Die erfindungsgemässe Werkzeugmaschine besteht aus einem oder mehreren zu kühlenden Maschinenelementen, insbesondere einer Motorspindel und/oder einer elektromechanischen Antriebseinheit und einem Kühlsystem.

Die Erfindung geht aus von einem Verfahren zum Regenerieren einer Kühlmitteldispersion mit Phasenwechselmaterial. Das Verfahren weist folgende Schritte auf: Redispergieren der Kühlmitteldispersion durch eine Redispergiereinheit, welche eine Blende aufweist; Ermöglichen des Einfrierens des Phasenwechselmaterials durch Abführen der in der Kühlmitteldispersion gespeicherten Wärme durch eine Rückkühleinheit, wobei die Rückkühleinheit so konfiguriert ist, dass die abgeführte Wärme mindestens teilweise rückgewonnen wird um die Kühlmitteldispersion auf eine Eintrittstemperatur aufzuheizen.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine schematische Darstellung des Kühlsystems
- Fig. 2: Vergleich der Wärmekapazität von Wasser und Phasenwechselmaterial
- Fig. 3: Messergebnis der Enthalpie von Phasenwechselmaterial
- Fig. 4: Verlauf der Enthalpie;
- Fig. 5: ein Ausführungsform der Regeneriervorrichtung
- Fig. 6: Rühreinheit
- Fig. 7: erste, zweite, und dritte Ausführungsform der Redispergiereinheit; und
- Fig. 8: vierte, fünfte und sechste Ausführungsform der Redispergiereinheit;
- Fig. 9: Kühlsystem zum Kühlen eines Maschinenelementes

### WEGE ZUR AUSFÜHRUNG DER ERFINDUNG

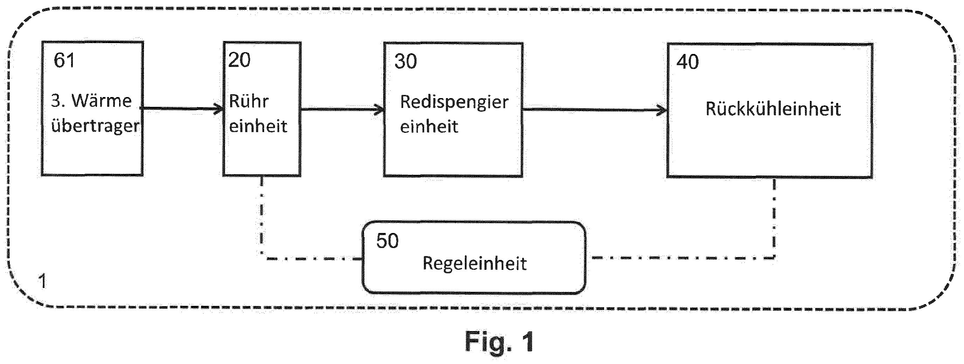

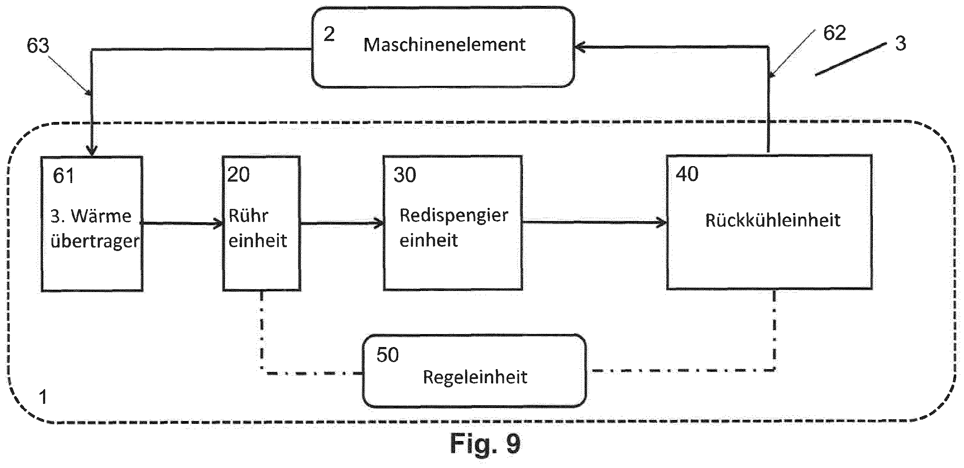

Fig. 1 zeigt eine schematische Darstellung der Regeneriervorrichtung 1 zum Regenerieren einer Kühlmitteldispersion mit einem Phasenwechselmaterial. Die Regeneriervorrichtung besteht aus einem dritten Wärmeübertrager 61, einer Rühreinheit 20, einer Redispergiereinheit 30, eine Rückkühleinheit 41 und einer Regeleinheit 50. Die Kühlmitteldispersion als Kühlmittel fliesst mit einer Eintrittstemperatur und in einer ersten Phase in ein zu kühlendes Maschinenelement ein, nimmt die Wärme des Maschinenelements auf und fliesst mit einer Austrittstemperatur und in einer zweiten Phase aus dem Maschinenelement. In der ersten Phase ist das Phasenwechselmaterial fest, während in der zweiten Phase liegt das Phasenwechselmaterial in die Form von Flüssigkeit vor. Die Rückkühleinheit 40 ist konfiguriert um die aufgenommene Wärme abzuführen und einen Phasenwechsel der Kühlmitteldispersion von der zweiten Phase zur ersten Phase zu möglichen. Des Weiteren wird die Kühlmitteldispersion bis zu einer Eintrittstemperatur geregelt welche am unteren Ende des Phasenwechseltemperaturbereichs liegt. Wie in Fig. 9 dargestellt, fliesst die aufgewärmte Kühlmitteldispersion durch den Einlauf 62 ins Maschinenelement 2 und fliesst durch den Auslauf 63 aus dem Maschinenelement.

Die Regeleinheit 50 umfasst eine Vielzahl von Temperatur- und Durchfluss-Wächtern um die Temperatur beziehungsweise den Durchfluss der Kühlmitteldispersion im Kühlsystem an verschiedenen Positionen zu überwachen und/oder zu steuern.

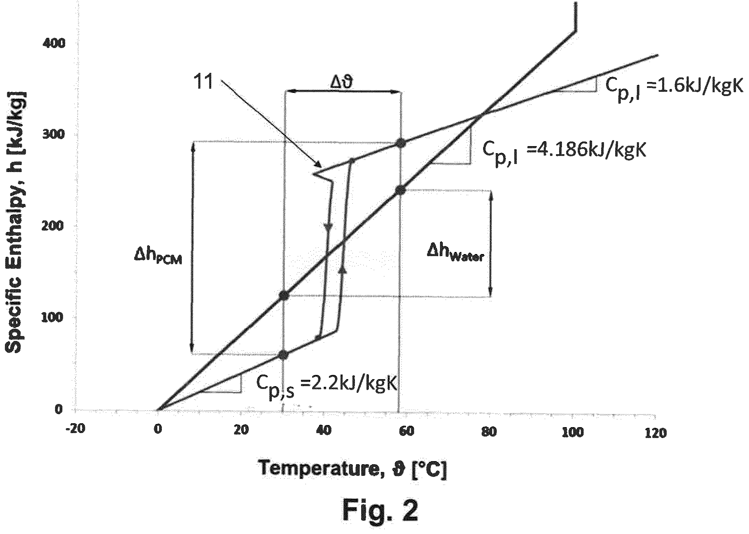

Die Dispersionen mit Phasenwechselmaterial weist die Eigenschaft auf, dass die Schmelztemperatur höher liegt als die Erstarrungstemperatur. Fig. 2 zeigt einen Vergleich der Abnahme von der Wärme von Phasenwechselmaterial mit Wasser. Das hier gezeigte Phasenwechselmaterial hat einen Phasenwechsel bei etwa 40°C. Für eine vergleichbare Temperaturdifferenz nimmt ein Phasenwechselmaterial wesentlich mehr Wärme auf und entsprechend ist im Phasenwechselbereich bei gleicher Wärmemenge weniger Temperaturdifferenz ersichtlich. Im theoretischen Grenzfall ist dies isotherm. Beim Abkühlen, wie die Kurve von oben rechts nach unten links zeigt, erkennt man die Unterkühlung 11 an der spitzen Nase, die weiter nach links verläuft, als es der normalen Hysterese entspräche.

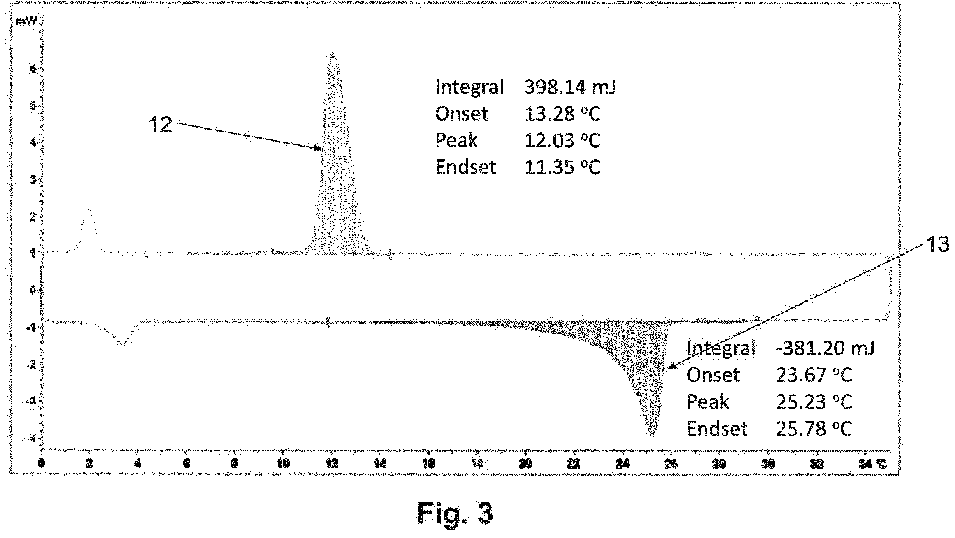

Fig. 3 zeigt eine Messung der Enthalpie über die Temperatur. Das Verfahren der dynamischen Differenzkalorimetrie kann dazu verwendet werden, die abgegebene oder aufgenommene Wärmemenge einer Probe zu erfassen.

in einer Ausführungsform hat die Dispersion einen dispersen Phasenanteil, nämlich der Anteil des Phasenwechselmaterials, von etwa 20%. Bei dieser Dispersion mit Paraffin als Phasenwechselmaterial und einem ethoxylierten Fettalkohol als Emulgator beträgt die Phasenwechselenthalpie etwa 30kJ/kg. In Figur 3 sind die aufgenommene Wärme 13 und die abgeführte Wärme 12 gezeigt. Durch eine optimale Wahl des Dispersionsmediums und des Phasenwechselmaterials kann die Phasenwechselenthalpie erhöht werden. In einer bevorzugten Variante wird eine Kühlmitteldispersion mit einem Anteil an disperser Phase von 30% verwendet. Damit kann die Phasenwechselenthalpie im Bereich von 60 kJ/kg bis 80 kJ/kg liegen.

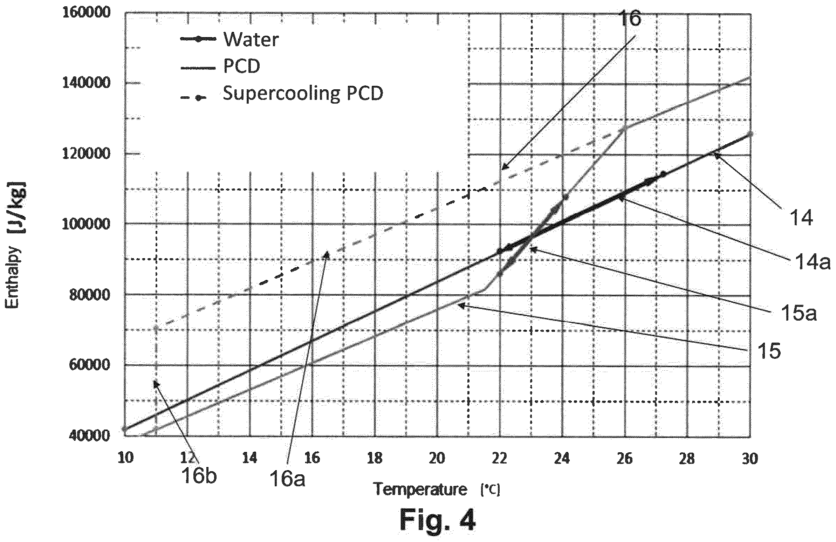

In Fig. 4 wird der Enthalpie-Verlauf im Verhältnis zur Temperatur in der Anwendung des Kühlens des Maschinenelementes dargestellt. Als Vergleich sind der berechnete Verlauf für Wasser und einer Dispersion mit einem Phasenwechselmaterial gezeigt.

In einer Ausführungsform ist das zu kühlende Maschinenelement eine Spindel. Um eine ausreichende Kühlung zu gewährleisten muss eine Wärmeleistung von beispielsweise 1400 Watt (resp. J/s) oder mehr von der Spindel abtransportiert werden. Die Betriebstemperatur der Spindel liegt im Bereich von 24 bis 25°C.

Die durchgezogene Linie 14 zeigt den Verlauf der Enthalpie, wenn Wasser als Kühlmittel verwendet wird. Beim Aufwärmen steigt die Enthalpie im gezeigten Bereich mit einer näherungsweise konstanten Steigung, welche die spezifische Wärmemenge über die Temperatur dargestellt, zum Beispiel vereinfacht mit einer in etwa konstanten spezifischen Wärmekapazität von 4200 J/kg.

Die durchgezogene Linie 15 zeigt den Verlauf der Enthalpie, wenn eine Dispersion mit einem Phasenwechselmaterial als Kühlmittel verwendet wird, für den Fall mit 20% Anteil der dispersen Phase Paraffin als Phasenwechselmaterial und ethoxylierter Fettalkohol als Emulgator.

Bis zum Erreichen des Phasenwechsels bei etwa 21.5°C (vgl. Fig. 3) ist die Steigung etwa 3800 J/kg. Dies liegt an dem Anteil organischer Phase von 20% mit etwas geringerer spezifischer Wärmekapazität als Wasser. Bei 21.5°C beginnt der Phasenwechsel. Dieser endet bei etwa 26°C.

Bei einer abgegebenen Wärmemenge von 2200 Watt und einem Kühlmittelwasserstrom von 6 l/min muss die spezifische Wärmemenge von 22000 J/kg vom Kühlmittelstrom aufgenommen werden. Für den Fall einer Kühlung mit Wasser ergibt sich eine Temperaturdifferenz von 5.3 K, Eintrittstemperatur z.B. 22°C und Austrittstemperatur von 27.3°C, wie in der Fig. 4 mit einem dicken Doppelpfeil 14a markiert. Für den Fall der Kühlung mit Dispersion mit Phasenwechselmaterial beträgt die Temperaturerhöhung lediglich 2.1 K. Für den Betrieb ist es wichtig, dass der Betrieb des Kühlmittels im Fall der Dispersion mit Phasenwechselmaterial im latenten Bereich erfolgt um eine effiziente Kühlung zu erzielen und um die Differenz zwischen der Eintrittstemperatur und Austritttemperatur des Kühlmittels zu minimieren.

Beim Abkühlen folgt der Enthalpieverlauf der Dispersion mit Phasenwechselmaterial nicht der Aufwärmkurve 15 sondern einer Abkühlkurve 16. Der Zustand der geschmolzenen dispersen Phase wird über den Schmelzpunkt hinweg beibehalten. Dieser Effekt der Unterkühlung ist idealisiert mit der Abkühlkurve 16 dargestellt. Der Effekt ist ebenfalls in der Dispersion mit Phasenwechselmaterial erkennbar. Die Unterkühlung ist nachteilig und nicht vermeidbar. Deshalb wird die eigentliche Phasenwechselenthalpie erst bei etwa 11°C abgeführt. In der Konsequenz muss eine Rückkühleinheit bei tieferen Temperaturen betrieben werden als die eigentliche Phasenwechseltemperatur. Ohne weitere Massnahmen führt dies zu einem geringeren Wirkungsgrad der Kältemaschine und zu einem sehr hohen Kühlleistungsbedarf und sogar der Notwendigkeit einer Rückerwärmung.

Der ersten Teil 16a der Abkühlkurve mit einer Steigung stellt das Abführen der sensibler Wärme dar, und der zweite Teil 16b der Abkühlkurve stellt das Abführen der latenten Wärme dar, namentlich die Phasenwechselenthalpie bei etwa 11°C. Nach dem Abführen der sensiblen Wärme ist das Phasenwechselmaterial immer noch in der zweiten Phase, also geschmolzen. Durch das Abführen der latenten Wärme wird das Phasenwechselmaterial von der zweiten Phase zur ersten Phase gebracht und das Phasenwechselmaterial ist im festen Zustand.

Wie im Figur 4 dargestellt muss die Dispersion mit dem Phasenwechselmaterial in einem festen Zustand auf die Eintrittstemperatur geregelt werden, welche beispielsweise am unteren Ende des Phasenumwandlungstemperaturbereichs liegt, damit das Maschinenelement mit einer möglichen konstanten Temperatur gekühlt wird.

Fig. 5 zeigt eine detaillierte schematische Darstellung einer Ausführungsform von der Regeneriervorrichtung, welche einen verbesserten Wirkungsgrad erbringt. Für das bessere Verständnis des Vorgangs mit der Kühlmitteldispersion mit Phasenwechselmaterial wird im Folgenden auf Temperaturmessstellen Bezug genommen und es werden Zahlenbeispiele von Temperaturen aufgeführt, die zum besseren Verständnis dienen. Diese sind aber nicht als genau und/oder bevorzugt zu verstehen.

TC und PC symbolisieren eine gesteuerte Temperatur und einen gesteuerten Druck und TI stellt die angezeigte Temperatur dar. Die Solltemperatur von TC2 ist 25°C und ist im Bereich von 23 bis 27°C einstellbar. Der Kondensationsdruck PC07 wird so gewählt, dass die Kondensationstemperatur 8°C ist und ist im Bereich von 6 bis 10°C einstellbar. Die Temperatur der Kühlmitteldispersion in der Rühreinheit TI01 stellt sich über TC02 ein und liegt im Bereich von 23 bis 27°C. Die Temperatur der Kühlmitteldispersion nach dem Austritt aus dem zweiten Wärmeübertrager 42 TI03 stellt sich über PC07 ein und liegt im Bereich von 9 bis 11°C. Die Temperatur der Kühlmitteldispersion am Ausgang der Regeneriervorrichtung TI04 stellt sich über TC02 ein und liegt im Bereich von 22 bis 23°C. Die Temperatur eines Kältemittels vor Eintritt in den zweiten Wärmeübertrager TI05 stellt sich über PC07 ein und liegt im Bereich von 6 bis 10°C. Um eine Überhitzung des Kältemittels zu vermeiden, soll die Temperaturdifferenz zwischen TI05 und TI06 kleiner als 2K sein.

Wenn die Kühlmitteldispersion aus dem zum kühlende Maschinenelementes ausfliesst, liegt die Temperatur der Kühlmitteldispersion im Bereich von 24 bis 25°C. Falls die Austrittstemperatur der Kühlmitteldispersion aus dem Maschinenelement 24°C beträgt, so ist sie nicht vollständig aufgeschmolzen. Dies kann zum Beispiel bei Teillast auftreten. In diesem Fall wird die Kühlmitteldispersion in einem dritten Wärmeübertrager 61vor dem Eintritt in die Redispergiereinheit weiter aufgewärmt. Das ist realisiert durch die Verwendung eines erhitzten Kältemittels 43, wie nachfolgend näher erläutert wird. In einer Variante wird die Kühlmitteldispersion bis zu einer Temperatur, die am Ende des Phasenumwandlungtemperaturbereichs liegt, geheizt, zum Beispiel bis auf 26°C. Dieser Vorgang führt dazu, dass die Kühlmitteldispersion mit Phasenwechselmaterial vollständig aufgeschmolzen ist und für das Durchströmen der nachfolgenden Elemente ideale Bedingungen vorliegen. Grosse Feststoffanteile in der Dispersion, zum Beispiel gefrorene Agglomerate könnten ansonsten Filter 22 und Redispergiereinheit 30 verstopfen. Das aufgeschmolzene Phasenwechselmaterial kann ein optimales Dispergieren durch die Redispergiereinheit gewährleisten. Des Weiteren kann ein zweiter Wärmeübertrager 42 besser betrieben werden, da für den effizienten Betrieb des zweiten Wärmeübertragers 42 eine hinreichend hohe Temperatur T02 notwendig ist. Dies ist notwendig, um der Dispersion an der Stelle TI04 eine hinreichend hohe Temperatur zu ermöglichen. In der Folge, liegt am zweiten Wärmeübertrager 42 einer hinreichend grossen Temperaturdifferenz vor, so dass der Zustand der Dispersion an der Stelle T04 so ist, dass der latente Bereich gerade anfängt. Dies ist zum Beispiel 22°C. Ohne den Aufwärmevorgang durch den dritten Wärmeübertrager 61 liegt die Temperatur der Kühlmitteldispersion an der Stelle TI04 bei 20°C, welche tiefer ist als die Temperatur, bei welcher der latente Bereich beginnt. Zwar könnte auch mit einer Temperatur von 20°C bei TI04 das Maschinenelement gekühlt werden. Allerdings erhöht sich der Wert der Temperaturerhöhung innerhalb des Maschinenelementes um weitere 2 Kelvin (22°C - 20°C) was die Temperaturkonstanz verringert und in der Auswirkung die Präzision der Maschine reduziert.

Die vom dritten Wärmeübertrager 61 aufgewärmte Kühlmitteldispersion fliesst durch eine Rühreinheit 20, einen Filter 22 und eine Blende 31, welche als Redispergiereinheit dient. Zwischen der Rühreinheit und dem Filter wird eine Pumpe 21 angeordnet, um das Durchströmen der Kühlmitteldispersion zu gewährleisten. Eine Vielzahl von Temperaturwächtern und Durchflusswächtern werden verwendet, um Temperaturen und Durchfluss im Kühlsystem zu überwachen und um die Regelkreise zu ermöglichen. Ein Durchflusswächter 51 ist vor dem Filter positioniert um den Durchfluss der Kühlmitteldispersion zu überwachen und zu messen.

Die Blende ist vorteilhaft nach dem Durchströmen des zu kühlenden Maschinenelementes anzuordnen. Nach Durchströmen eines zu kühlenden Maschinenelementes ist das Phasenwechselmaterial in der Kühlmitteldispersion geschmolzen. Die Kühlmitteldispersion mit dem Phasenwechselmaterial liegt als Emulsion vor und lässt sich leicht dispergieren.

Im ersten Wärmeübertrager 41 wird die gesamte Enthalpie der Kühlmitteldispersion abgeführt, bis die Dispersion eine Temperatur von 11°C erreicht. Der Phasenwechsel hat noch nicht stattgefunden. Es ist in Fig. 4 ersichtlich, dass die im sensiblen Bereich übertragene Wärmemenge viel grösser ist, als die des eigentlichen Phasenwechsels im latenten Bereich.

Im zweiten Wärmeübertrager 42 wird bei etwa 11°C (auf der Seite der Dispersion) der Phasenwechsel durch Abfuhr der Schmelzenthalpie vollzogen. Die Kühlmitteldispersion mit dem Phasenwechselmaterial liegt jetzt erstarrt bei 11°C vor. Diese Temperatur bei der Stelle TI03 kann mittels eines Temperaturwächters ermittelt werden. Die kalte Kühlmitteldispersion aus dem zweiten Wärmeübertrager 42 fliesst zurück durch den ersten Wärmeübertrager 41 und wird dort auf die gewünschte Eintrittstemperatur von 22°C an der Stelle T04 gebracht. Die Temperaturänderung von 11°C an der Stelle TI03 auf 22°C an der Stelle TI04 ist leichter kleiner als die Differenz des Hinwegs, nämlich 24°C an der Stelle T02 bis Eintritt in zweiten Wärmeübertrager 42 bei 11°C. Damit können kleine Wärmeverluste kompensiert werden. Die Stromführung in ersten Wärmeübertrager 41 ist bevorzugt im Gegenstrom. Somit liegt die Eintrittstemperatur an der Stelle T04 vorteilhaft im latenten Bereich, zum Beispiel bei 22°C.

TC02 liegt vorteilhat so, dass die Temperatur der Kühlmitteldispersion so hoch ist, dass eine Emulsion vorliegt. Diese Regelung ist angedeutet in Fig. 5 durch eine gestrichelte Linie. Die Heissgastemperatur nach dem Kältemittelverdichter liegt auf einem Temperaturniveau grösser Umgebungstemperatur, um mit einem Luftkühler die Wärme an die Umgebung abzugeben, Vorteilhaft ist die Heissgastemperatur > 30°C, besonders vorteilhaft bei 40°C.

Zusätzlich wird eine hinreichend tiefe Temperatur TI03 (z.B. 11°C) durch eine tiefer liegende Temperatur des Kältemittels (TI05) von zum Beispiel 8°C sichergesellt. Die Regelung von TI05 im Kältemittelkreislauf wird durch eine Bypass-Regelung vorteilhaft gelöst, dabei wird der Bypassdruck PC07 geregelt. Der notwendige Druck kann entsprechend dem eingesetzten Kältemittel gewählt werden. Der zweite Wärmeübertrager 43, der im Gegenstrom betrieben wird, ermöglicht die Unterkühlung mit einem reduzierten Kältebedarf und hoher Energieeffizienz.

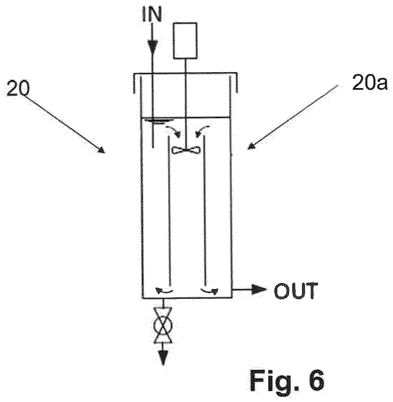

Fig. 6 zeigt eine schematische Darstellung der Rühreinheit 20. Die Kühlmitteldispersion fliesst von oben in die Rühreinheit. Ein Rohr 20a für Strömungsführung ist in der Rühreinheit angeordnet. Dadurch soll eine gute homogene Durchmischung gewährleistet werden. Das eingesetzte Rohr kann unten Quernuten enthalten und damit auf den Behälterboden gestellt werden, wodurch die Kühlmitteldispersion durch die Quernuten ausströmen und wie abgebildet zirkulieren kann. Die durchgemischte Kühlmitteldispersion kann aus einer Öffnung ausfliessen, welche am unteren Teil der Rühreinheit angeordnet ist.

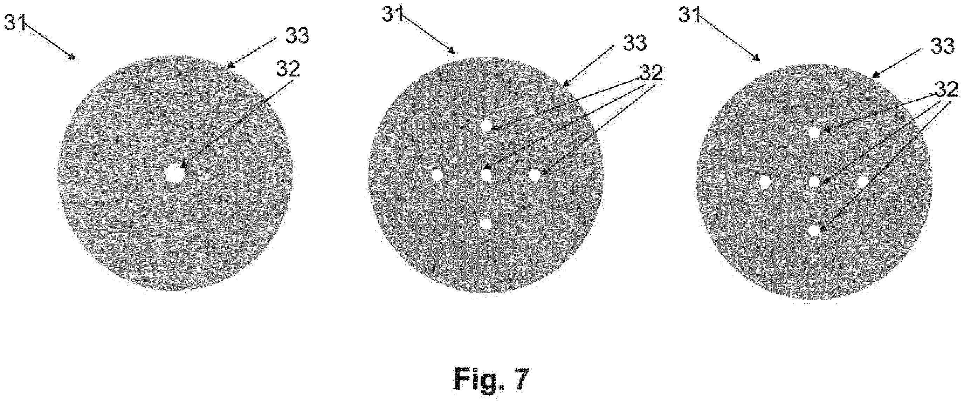

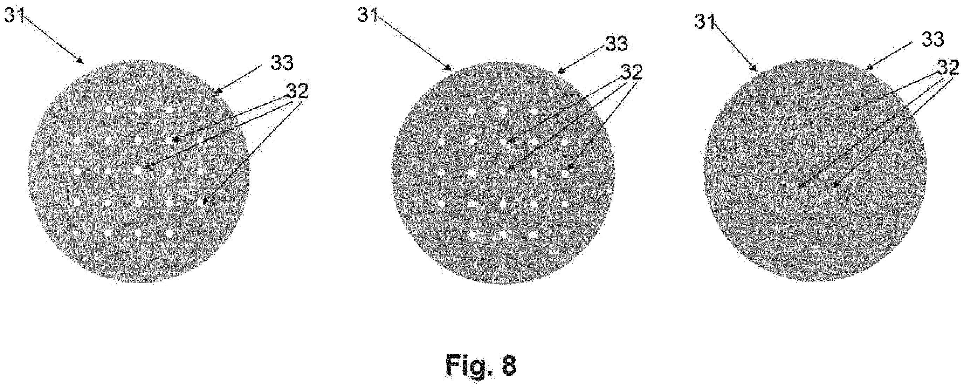

Fig. 7 und Fig. 8 zeigen sechs Ausführungsformen der Blende 31. Alle Ausführungsforme weisen eine runde Blendenkörper 33 auf. Die Blendenöffnungen 32 sind durchgehend in die Blendenkörper angebracht. Die Anzahl der Blendenöffnung ist in verschiedenen Ausführungsformen unterschiedlich. Eine Ausführungsform hat eine Blendenöffnung. Die Anzahl der Blendenöffnungen von weiterem Ausführungsforme ist 5, 9, 21, 29 und 61 um den Druckabfallbei vorgegebenem Durchfluss anzupassen. Der Durchmesser der Blendenöffnungen können variieren, zum Beispiel 2.5 mm, 1,5 mm, 1 mm, 0.7 mm und 0.5 mm.

Die Blendenöffnungen in den Blenden sind vorteilhaft kreisförmig, können aber beliebige Geometrien haben.

Fig. 9 zeigt ein Kühlsystem 3 zum Kühlen eines Maschinenelements mittels einer Kühlmitteldispersion. Eine Regeneriervorrichtung 1 ist verwendet um die Kühlmitteldispersion zu regenerieren.

### Bezugszeichenliste

- 1: Regeneriervorrichtung
- 2: Maschinenelement
- 3: Kühlsystem
- 10: Dispersion
- 11: Unterkühlung
- 12: abgeführte Wärme
- 13: aufgenommene Wärme
- 14: Verlauf der Enthalpie (Wasser)
- 15: Verlauf der Enthalpie (Dispersion mit Phasenwechselmaterial)
- 16: Abkühlkurve (Dispersion mit Phasenwechselmaterial)
- 20: Rühreinheit
- 20a: Rohr
- 21: Pumpe
- 22: Filter
- 30: Redispergiereinheit
- 31: Blende
- 32: Blendenöffnung
- 33: Blendenkörper
- 40: Rückkühleinheit
- 41: 1. Wärmeübertrager
- 42: 2. Wärmeübertrager
- 43: Kältesystem
- 50: Regeleinheit
- 51: Durchflusswächter
- 61: 3. Wärmeübertrager
- 62: Ablauf
- 63: Einlauf

## Patentansprüche

1. Eine Regeneriervorrichtung (1) zum Regenerieren einer Kühlmitteldispersion mit einem Phasenwechselmaterial umfassend:
eine Redispergiereinheit (30) zum Redispergieren der Kühlmitteldispersion, welche eine Blende aufweist; und
eine Rückkühleinheit (40), welche das Einfrieren des Phasenwechselmaterials durch Abführen der in der Kühlmitteldispersion gespeicherten Wärme ermöglicht,
wobei die Rückkühleinheit (40) so konfiguriert ist, dass die abgeführte Wärme mindestens teilweise rückgewonnen wird um die Kühlmitteldispersion auf eine Eintrittstemperatur aufzuheizen.

2. Die Regeneriervorrichtung nach Anspruch 1, **dadurch gekennzeichnet, dass** die Rückkühleinheit (40) so konfiguriert ist dass die sensible Wärme abgeführt wird um die Kühlmitteldispersion zu kühlen und die latenten Wärme abgeführt wird um das Einfrieren des Phasenwechselmaterials zu ermöglichen.

3. Die Regeneriervorrichtung nach einem der vorangehenden Ansprüche, **dadurch gekennzeichnet, dass** die Rückkühleinheit (40) einen ersten Wärmeübertrager (41) umfasst, welcher mindestens einen Anteil der sensiblen und/oder latenten Wärme abführen kann.

4. Die Regeneriervorrichtung nach Anspruch 3, **dadurch gekennzeichnet, dass** der erste Wärmeübertrager (41) im Gegenstrom betrieben wird um mindesten einen Anteil der sensiblen und/oder latenten Wärme rekuparativ zum Aufheizen der Kühlmitteldispersion auf die Eintrittstemperatur zu verwenden.

5. Die Regeneriervorrichtung nach einem der vorangehenden Ansprüche, **dadurch gekennzeichnet, dass** die Rückkühleinheit (40) einen zweiten Wärmeübertrager (42) enthält, welcher mit einem Kältesystem (43) verbunden ist um das Einfrieren des Phasenwechselmaterials durch Abführen mindestens eines Teils der latenten Wärme der Kühlmitteldispersion zu ermöglichen.

6. Die Regeneriervorrichtung nach einem der vorangehenden Ansprüche, **dadurch gekennzeichnet, dass** die Eintrittstemperatur im Phasenumwandlungstemperaturbereich des Phasenwechselmaterials liegt, während welchem das Phasenwechselmaterial von Fest zu Flüssig- Zustand wechselt, vorzugsweise im unteren Bereich der Phasenumwandlungstemperaturbereichs.

7. Die Regeneriervorrichtung nach einem der vorangehenden Ansprüche, **dadurch gekennzeichnet, dass** ein dritter Wärmeübertrager (61) verwendet wird um die Temperatur der Kühlmitteldispersion auf eine zweite Solltemperatur zu regeln bevor die Kühlmitteldispersion in die Redispergiereinheit (30) eintritt.

8. Die Regeneriervorrichtung nach Anspruch 7, **dadurch gekennzeichnet**, der dritte Wärmeübertrager (61) mit dem Kältesystem (43) verbunden ist um einen Teil der Wärme aus dem Kältesystem rekuperativ zu verwenden.

9. Die Regeneriervorrichtung nach Anspruch 7 oder 8, **dadurch gekennzeichnet, dass** die zweite Solltemperatur im oberen Bereich des Phasenumwandlungtemperaturbereichs liegt, bevorzugt im Bereich von 25 bis 26 °C.

10. Die Regeneriervorrichtung nach einem der Ansprüche 7 bis 9, **dadurch gekennzeichnet, dass** der dritte Wärmeübertrager (61) vor der Redispergiereinheit (30) angeordnet ist und der erste und zweite Wärmeübertrager (41, 42) nach der Redispergiereinheit (30) angeordnet sind.

11. Die Regeneriervorrichtung nach einem der Ansprüche 7 bis 10, **dadurch gekennzeichnet dass** eine Rühreinheit (20) zwischen dem dritten Wärmeübertrager (61) und Redispergiereinheit (30) angeordnet ist.

12. Die Regeneriervorrichtung nach einem der vorangehenden Ansprüche, **dadurch gekennzeichnet, dass** die Regeneriervorrichtung eine Regeleinheit umfasst, welche mindestens einen Temperaturwächter und mindestens einen Durchflusswächter aufweist.

13. Die Regeneriervorrichtung nach Anspruch 12, **dadurch gekennzeichnet, dass** ein modelbasierte prädiktive Regler verwendet ist.

14. Die Regeneriervorrichtung nach Anspruch 13, **dadurch gekennzeichnet, dass** die Eintrittstemperatur in Abhängigkeit des Kühlbedarfs so geregelt wird, dass die Wärmeaufnahme im Maschinenelement möglichst nahe beim optimalen Betriebspunkt erfolgt.

15. Regeneriervorrichtung nach Anspruch 13, **dadurch gekennzeichnet, dass** der Anteil an aufgeschmolzenem Phasenwechselmaterial so geregelt wird, dass die verfügbare latente Wärmekapazität dem effektiven Kühlbedarf im Maschinenelement entspricht.

16. Die Regeneriervorrichtung nach einem der vorangehenden Ansprüche, **dadurch gekennzeichnet, dass** die Blende (31) einen scheibenförmigen Blendenkörper (33) und mindestens eine Blendenöffnung (32), vorzugsweise eine Vielzahl von Blendenöffnungen aufweist.

17. Die Regeneriervorrichtung nach einem der vorangehenden Ansprüche, **dadurch gekennzeichnet, dass** die Blendenöffnung (32) einen Durchmesser im Bereich von 0.5 bis 2.5 mm besitzt.

18. Die Regeneriervorrichtung nach einem der vorangehenden Ansprüche, **dadurch gekennzeichnet, dass** die Blendenöffnungen (32) durchgehend gleichverteilt zu einander im Blendenkörper (33) angeordnet sind.

19. Eine Redispergiereinheit (30) zum Redispergieren einer Kühlmitteldispersion mit Phasenwechselmaterial, für die Regeneriervorrichtung nach Anspruch 1, wobei die Redispergiereinheit eine Blende (31) aufweist.

20. Die Redispergiereinheit nach Anspruch 19, **dadurch gekennzeichnet, dass** die Blende (31) einen scheibenförmigen Blendenkörper (33) und mindestens eine Blendenöffnung (32), vorzugsweise eine Vielzahl von Blendenöffnungen aufweist.

21. Ein Kühlsystem (3) zum Kühlen eines Maschinenelementes (2) umfassend eine Kühlmitteldispersion mit Phasenwechselmaterial und eine Regeneriervorrichtung nach einem der Ansprüche 1-18.

22. Werkzeugmaschine bestehend aus mindestens einem Maschinenelement (2), insbesondere einer Motorspindel oder einer elektromechanische Antriebseinheit, mit einem Kühlsystem (3) nach Anspruch 21.

23. Verfahren zum Regenerieren einer Kühlmitteldispersion mit einem Phasenwechselmaterial umfassend:
Redispergieren der Dispersion durch eine Redispergiereinheit (30), nach Anspruch 19, welche eine Blende (31) aufweist; und
Ermöglichen das Einfrieren des Phasenwechselmaterials durch Abführen der in der Kühlmitteldispersion gespeicherten Wärme durch eine Rückkühleinheit (40) wobei die Rückkühleinheit so konfiguriert ist, dass die abgeführte Wärme mindestens teilweise rückgewonnen wird um die Kühlmitteldispersion auf eine Eintrittstemperatur aufzuheizen.

## Claims

1. Regeneration device (1) for regenerating a coolant dispersion with a phase change material comprising:
a redispersion unit (30) for redispersing the coolant dispersion, which has a restrictor; and
a recooling unit (40) which enables the freezing of the phase change material by dissipating the heat stored in the coolant dispersion,
wherein
the recooling unit (40) is configured so that the dissipated heat is at least partially recuperated in order to heat up the coolant dispersion to an inlet temperature.

2. Regeneration device according to Claim 1, **characterized in that** the recooling unit (40) is configured so that the sensible heat is dissipated in order to cool the coolant dispersion and the latent heat is dissipated in order to enable the freezing of the phase change material.

3. Regeneration device according to one of the preceding claims, **characterized in that** the recooling unit (40) comprises a first heat exchanger (41) which can dissipate at least a proportion of the sensible and/or latent heat.

4. Regeneration device according to Claim 3, **characterized in that** the first heat exchanger (41) is operated in counterflow in order to recuperatively use at least a proportion of the sensible and/or latent heat for heating up the coolant dispersion to the inlet temperature.

5. Regeneration device according to one of the preceding claims, **characterized in that** the recooling unit (40) includes a second heat exchanger (42) which is connected to a refrigeration system (43) in order to enable the freezing of the phase change material by dissipating at least some of the latent heat of the coolant dispersion.

6. Regeneration device according to one of the preceding claims, **characterized in that** the inlet temperature lies within the phase transition temperature range of the phase change material during which the phase change material changes from the solid to the liquid state, preferably in the lower region of the phase transition temperature range.

7. Regeneration device according to one of the preceding claims, **characterized in that** use is made of a third heat exchanger (61) in order to adjust the temperature of the coolant dispersion to a second target temperature before the coolant dispersion enters the redispersion unit (30).

8. Regeneration device according to Claim 7, **characterized in that** the third heat exchanger (61) is connected to the refrigeration system (43) in order to recuperatively use some of the heat from the refrigeration system.

9. Regeneration device according to Claim 7 or 8, **characterized in that** the second target temperature lies in the upper region of the phase transition temperature range, preferably in the region of between 25 and 26°C.

10. Regeneration device according to one of Claims 7 to 9, **characterized in that** the third heat exchanger (61) is arranged upstream of the redispersion unit (30) and the first and second heat exchangers (41, 42) are arranged downstream of the redispersion unit (30).

11. Regeneration device according to one of Claims 7 to 10, **characterized in that** a mixing unit (20) is arranged between the third heat exchanger (61) and the redispersion unit (30).

12. Regeneration device according to one of the preceding claims, **characterized in that** the regeneration device comprises a control unit which has at least one temperature monitor and at least one flow rate monitor.

13. Regeneration device according to Claim 12, **characterized in that** a model-based predictive controller is used.

14. Regeneration device according to Claim 13, **characterized in that** the inlet temperature is controlled in dependence of the cooling requirement so that the heat absorption in the machine element is carried out as close as possible to the optimum operating point.

15. Regeneration device according to Claim 13, **characterized in that** the proportion of melted phase change material is controlled so that the available latent heat capacity corresponds to the effective cooling requirement in the machine element.

16. Regeneration device according to one of the preceding claims, **characterized in that** the restrictor (31) has a disc-like restrictor body (33) and at least one restrictor orifice (32), preferably a multiplicity of restrictor orifices.

17. Regeneration device according to one of the preceding claims, **characterized in that** the restrictor orifice (32) has a diameter within the range of between 0.5 and 2.5 mm.

18. Regeneration device according to one of the preceding claims, **characterized in that** the restrictor orifices (32) are arranged in the restrictor body (33) in a continuous equally distributed manner in relation to each other.

19. Redispersion unit (30) for redispersing a coolant dispersion with phase change material, for the regeneration device according to Claim 1, wherein the redispersion unit has a restrictor (31).

20. Redispersion unit according to Claim 19, **characterized in that** the restrictor (31) has a disc-like restrictor body (33) and at least one restrictor orifice (32), preferably a multiplicity of restrictor orifices.

21. Cooling system (3) for cooling a machine element (2) comprising a coolant dispersion with phase change material and a regeneration device according to one of Claims 1 - 18.

22. Machine tool consisting of at least one machine element (2), especially a motor spindle or an electromechanical drive unit, having a cooling system (3) according to Claim 21.

23. Method for regenerating a coolant dispersion with a phase change material comprising:
redispersing the dispersion by means of a redispersion unit (30), according to Claim 19, which has a restrictor (31); and
enabling the freezing of the phase change material by dissipating the heat stored in the coolant dispersion by means of a recooling unit (40), wherein the recooling unit is configured so that the dissipated heat is at least partially recuperated in order to heat up the coolant dispersion to an inlet temperature.

## Revendications

1. Dispositif de régénération (1) pour la régénération d'une dispersion de réfrigérant avec un matériau à changement de phase, comprenant :
une unité de redispersion (30) pour la redispersion de la dispersion de réfrigérant, qui présente un diaphragme ; et
une unité aéroréfrigérante (40), qui permet la congélation du matériau à changement de phase par dissipation de la chaleur stockée dans la dispersion de réfrigérant,
l'unité aéroréfrigérante (40) étant configurée de telle sorte que la chaleur dissipée est au moins partiellement récupérée afin de chauffer la dispersion de réfrigérant à une température d'entrée.

2. Dispositif de régénération selon la revendication 1, **caractérisé en ce que** l'unité aéroréfrigérante (40) est configurée de telle sorte que la chaleur sensible est dissipée afin de refroidir la dispersion de réfrigérant et la chaleur latente est dissipée afin de permettre la congélation du matériau à changement de phase.

3. Dispositif de régénération selon l'une quelconque des revendications précédentes, **caractérisé en ce que** l'unité aéroréfrigérante (40) comprend un premier échangeur de chaleur (41), qui peut dissiper au moins une proportion de la chaleur sensible et/ou latente.

4. Dispositif de régénération selon la revendication 3, **caractérisé en ce que** le premier échangeur de chaleur (41) fonctionne à contre-courant afin d'utiliser au moins une proportion de la chaleur sensible et/ou latente de manière récupérative pour le chauffage de la dispersion de réfrigérant à la température d'entrée.

5. Dispositif de régénération selon l'une quelconque des revendications précédentes, **caractérisé en ce que** l'unité aéroréfrigérante (40) contient un deuxième échangeur de chaleur (42) qui est relié à un système de refroidissement (43) afin de permettre la congélation du matériau à changement de phase par dissipation d'au moins une partie de la chaleur latente de la dispersion de réfrigérant.

6. Dispositif de régénération selon l'une quelconque des revendications précédentes, **caractérisé en ce que** la température d'entrée se situe dans la plage de température de changement de phase du matériau à changement de phase pendant laquelle le matériau à changement de phase passe de l'état solide à l'état liquide, de préférence dans la plage inférieure de la plage de température de changement de phase.

7. Dispositif de régénération selon l'une quelconque des revendications précédentes, **caractérisé en ce qu'**un troisième échangeur de chaleur (61) est utilisé afin de réguler la température de la dispersion de réfrigérant à une deuxième température de consigne avant que la dispersion de réfrigérant n'entre dans l'unité de redispersion (30).

8. Dispositif de régénération selon la revendication 7, **caractérisé en ce que** le troisième échangeur de chaleur (61) est relié au système de refroidissement (43) afin d'utiliser de manière récupérative une partie de la chaleur provenant du système de refroidissement.

9. Dispositif de régénération selon la revendication 7 ou 8, **caractérisé en ce que** la deuxième température de consigne se situe dans la plage supérieure de la plage de température de changement de phase, de préférence dans la plage allant de 25 à 26 °C.

10. Dispositif de régénération selon l'une quelconque des revendications 7 à 9, **caractérisé en ce que** le troisième échangeur de chaleur (61) est agencé avant l'unité de redispersion (30) et le premier et le deuxième échangeur de chaleur (41, 42) sont agencés après l'unité de redispersion (30).

11. Dispositif de régénération selon l'une quelconque des revendications 7 à 10, **caractérisé en ce qu'**une unité d'agitation (20) est agencée entre le troisième échangeur de chaleur (61) et l'unité de redispersion (30).

12. Dispositif de régénération selon l'une quelconque des revendications précédentes, **caractérisé en ce que** le dispositif de régénération comprend une unité de régulation qui présente au moins un contrôleur de température et au moins un contrôleur de débit.

13. Dispositif de régénération selon la revendication 12, **caractérisé en ce qu'**un régulateur prédictif basé sur un modèle est utilisé.

14. Dispositif de régénération selon la revendication 13, **caractérisé en ce que** la température d'entrée est régulée en fonction de la demande de refroidissement de telle sorte que l'absorption de chaleur dans l'élément de machine soit aussi proche que possible du point de fonctionnement optimal.

15. Dispositif de régénération selon la revendication 13, **caractérisé en ce que** la proportion de matériau à changement de phase fondu est régulée de telle sorte que la capacité thermique latente disponible correspond à la demande de refroidissement effective dans l'élément de machine.

16. Dispositif de régénération selon l'une quelconque des revendications précédentes, **caractérisé en ce que** le diaphragme (31) présente un corps de diaphragme en forme de disque (33) et au moins une ouverture de diaphragme (32), de préférence une pluralité d'ouvertures de diaphragme.

17. Dispositif de régénération selon l'une quelconque des revendications précédentes, **caractérisé en ce que** l'ouverture de diaphragme (32) possède un diamètre dans la plage allant de 0,5 à 2,5 mm.

18. Dispositif de régénération selon l'une quelconque des revendications précédentes, **caractérisé en ce que** les ouvertures de diaphragme (32) sont réparties en continu de manière uniforme les unes par rapport aux autres dans le corps de diaphragme (33).

19. Unité de redispersion (30) pour la redispersion d'une dispersion de réfrigérant avec un matériau à changement de phase, pour le dispositif de régénération selon la revendication 1, l'unité de redispersion présentant un diaphragme (31).

20. Unité de redispersion selon la revendication 19, **caractérisée en ce que** le diaphragme (31) présente un corps de diaphragme en forme de disque (33) et au moins une ouverture de diaphragme (32), de préférence une pluralité d'ouvertures de diaphragme.

21. Système de refroidissement (3) pour le refroidissement d'un élément de machine (2) comprenant une dispersion de réfrigérant avec un matériau à changement de phase et un dispositif de régénération selon l'une quelconque des revendications 1 à 18.

22. Machine-outil constituée d'au moins un élément de machine (2), notamment d'une broche de moteur ou d'une unité d'entraînement électromécanique, avec un système de refroidissement (3) selon la revendication 21.

23. Procédé de régénération d'une dispersion de réfrigérant avec un matériau à changement de phase comprenant :
la redispersion de la dispersion par une unité de redispersion (30), selon la revendication 19, qui présente un diaphragme (31) ; et
le fait de permettre la congélation du matériau à changement de phase par dissipation de la chaleur stockée dans la dispersion de réfrigérant par une unité aéroréfrigérante (40), l'unité aéroréfrigérante étant configurée de telle sorte que la chaleur dissipée est au moins partiellement récupérée afin de chauffer la dispersion de réfrigérant à une température d'entrée.
